# EUROPEAN PATENT APPLICATION

(11) **EP 0 733 944 A2**
(43) Date of publication of application: **25.09.1996**
(21) Application number: 96200783.7
(22) Date of filing: 21.03.1996
(51) Int. Cl.: G03C 1/765, G03C 11/02

(54) **Photographic filmstrip with an end of film feature**

(30) Priority: 24.03.1995 US 410184
(71) Applicant: EASTMAN KODAK COMPANY, Rochester, New York 14650-2201 (US)
(72) Inventor: Merle, Thomas Clark, Rochester, New York 14650-2201 (US); Ryan, Dale William, Rochester, New York 14650-2201 (US); Rowden, David Lawrence, Rochester, New York 14650-2201 (US)
(74) Representative: Phillips, Margaret Dawn

(57) **Abstract**

Described herein is a photographic filmstrip having a feature (44) which is directly associated with a physical end (46) of a filmstrip (40). The feature (44) is located at a precise, end-locating distance from the physical end (46) of the filmstrip (40) for positively confirming the physical end thereof prior to an attachment and/or detachment operation. The location of the feature (44) is chosen such that the physical end (46) of the filmstrip (40) can be re-formed at least once with its associated features enabling attachment and/or detachment together with the locating feature (44).

## Description

### Field of the Invention

This invention relates generally to photographic systems, and more particularly to a filmstrip having a feature that is directly associated with a physical end of a trailing end of a filmstrip. The feature is useful for positioning the physical end of the filmstrip prior to an attachment or detachment operation, and to a method for positioning the filmstrip.

### Background of the Invention

As part of the attachment or detachment process for filmstrips, it may be required for the photographic system to accurately and reliably sense the position of the physical end of a filmstrip. This may be necessary to insure that the filmstrip is completely unwound from a film cartridge prior to the detachment operation or that the physical end of the filmstrip is fully positioned prior to an attachment operation. For these functions, the exposed image area of the filmstrip is not important. Most film features (i.e. perforations and holes) are intended as features that identify individual exposure frames or the end of the exposure area but not to identify the position of the physical end of the filmstrip. Technologies exist to sense tension in a web or film features that relate to the exposure area of a film but both schemes are deficient in that sensing of the position of the physical end of the filmstrip is not absolutely confirmed.

US-A-3 943 356 discloses a method for signaling that the last frame of a film has been exposed in a simplified camera by providing that the last frame of the film has an elongated perforation which cooperates with a film advance lever and a release lever so that the film cannot be advanced any further.

US-A-4 437 751 discloses a film transport arrangement in which an increased perforation hole is provided after the last frame of a film to allow engagement of a double sensor. Moving the film and the sensor engages a locking lever which prevents further transport of the film.

Neither US-A-3 943 356 or US-A-4 437 751 provides a method for sensing the position of the physical end of the film.

It is an object of this invention to provide a filmstrip having a trailing end with a feature spaced at an end-locating distance from the physical end of the filmstrip, to allow a positive confirmation of the position of the physical end of the filmstrip which is not related to the exposure area of the filmstrip. It is another object of the invention to utilize an exposure area film feature as an anticipation feature for locating the end of film feature.

In the present application the term "end-locating distance" defines a length corresponding to a distance measured from a physical end of a filmstrip, in a photographic filmstrip having a filmstrip exposure area on a portion of the filmstrip and a filmstrip trailing end, the distance being greater than length of the filmstrip remaining inside a corresponding film cartridge with a spool core to which the trailing end is attached when the filmstrip is fully withdrawn and is still attached to the spool core, and the distance also being less than a distance from an end of the exposure area to the physical end of a filmstrip trailing end.

### Summary of the Invention

In accordance with one aspect of the present invention, there is provided a photographic filmstrip for use in a cartridge which includes a cartridge shell, a spool rotatably mounted within the shell and having a core, and an opening in the shell through which the filmstrip can be inserted into or removed from the shell, the filmstrip comprising:
an exposure area, a physical end, and a trailing end portion between the exposure area and the physical end, the trailing end portion having features near the physical end for enabling the filmstrip to be selectively attached to or detached from the core;
characterized in that the filmstrip further comprises a locating feature on the trailing end portion which is positioned at a first distance from the physical end for locating a position thereof, the first distance being greater than a length of the filmstrip which will remain inside the shell when the trailing end portion remains attached to the core and the filmstrip has been withdrawn from the shell to permit detachment of the features from the core;
and in that the first distance is less than a second distance from the physical end such that the first and second distances are sufficient to allow at least one re-forming of the physical end with the features enabling attachment and detachment and the locating feature.

The photographic filmstrip has a physical end capable of being accurately positioned prior to attachment to or detachment from a film holding device, and comprises a filmstrip exposure area on a portion of the filmstrip, and a filmstrip trailing end having a perforation located at an end-locating distance from the physical end for accurately locating the physical end of the filmstrip. The end-locating distance is greater than a length of the filmstrip remaining inside a corresponding film cartridge with a spool core when the filmstrip is fully withdrawn and is still attached to the spool core and less than a distance from an end of the exposure area to the physical end of the filmstrip trailing end.

Advantageously, the filmstrip further comprises an anticipation feature located more remotely from the physical end of the filmstrip than the perforation for locating the physical end of filmstrip, wherein the perforation and the anticipation feature are both adjacent to the same edge of the filmstrip.

In accordance with another aspect of the invention, there is provided a method for positioning a photographic filmstrip having a physical end prior to detachment from a filmstrip holding device, in which the filmstrip includes, a filmstrip exposure area on a portion of the film and a filmstrip trailing end having a perforation located at an end-locating distance from the physical end for accurately locating the physical end of the filmstrip. The method comprises the steps of: unwinding the filmstrip from a film holding device by means of an unwinder; locating with a sensor connected to the unwinder the presence of the perforation; and signaling a control circuit connected to the sensor and the unwinder to stop the unwinder, whereby the position of the physical end of the filmstrip is positively confirmed.

The novel aspects of this invention are set forth with particularity in the appended claims. The invention itself, together with further objects and advantages thereof may be more fully comprehended by reference to the following detailed description of a presently preferred embodiment of the invention taken in conjunction with the accompanying drawings.

### Brief Description of the Drawings

Figure 1 illustrates an example of a filmstrip with exposure area film features;
Figure 2A illustrates a first example of a filmstrip with an end of filmstrip feature;
Figure 2B illustrates schemetically a film cartridge with a spool core to which a filmstrip is attached, plus features for rotating the spool core and detecting an end of filmstrip feature;
Figure 3 illustrates a second example of a filmstrip with an end of filmstrip feature; and
Figure 4 illustrates a third example of a filmstrip with an end of filmstrip feature.

### Detailed Description of the Invention

Although different filmstrip size cameras can incorporate the film and methods of this invention, the invention is disclosed as being embodied preferably for a filmstrip loaded in a cartridge (cassette) for use with a 35mm still camera and associated photo finishing equipment. Because such a filmstrip and equipment are well known, this description is directed in particular to photographic elements forming part of or cooperating directly with the disclosed embodiment. However, other film sizes also fall within the invention. It is to be understood, however, that other elements not specifically shown or described may take various forms known to persons of ordinary skill in the art.

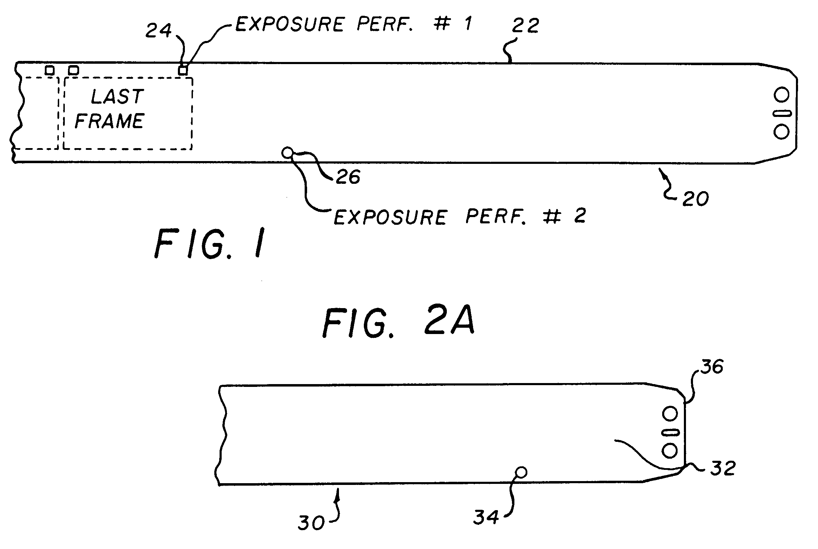

Referring to Figure 1, an example of a filmstrip 20 with known exposure area features is shown. The trailing end portion 22 of the filmstrip has first and second exposure features in the form of perforations at locations 24 or 26 adjacent to the edges of the filmstrip. Perforations 24, 26 are directly related to the exposure area of the filmstrip and signal to a camera or photo finishing equipment that the last exposed frame has been reached. These perforations are pre-formed during manufacture of the unexposed film. Because of film damage which can result from abuse or necessary processing operations, it is sometimes necessary to reshape or re-form the physical end of the filmstrip so that the film can be re-attached to a film holding device. This is accomplished by positioning the filmstrip in a film re-shaping device which can re-form the end of the film by cutting off the damaged end and re-shaping and perforating the filmstrip in the desired end of film configuration. When this is done the film is shortened and the relationship between the exposure area features and the physical end of the filmstrip changes. Thus an exposure feature cannot be used by itself to determine the position of a re-formed physical end of a filmstrip.

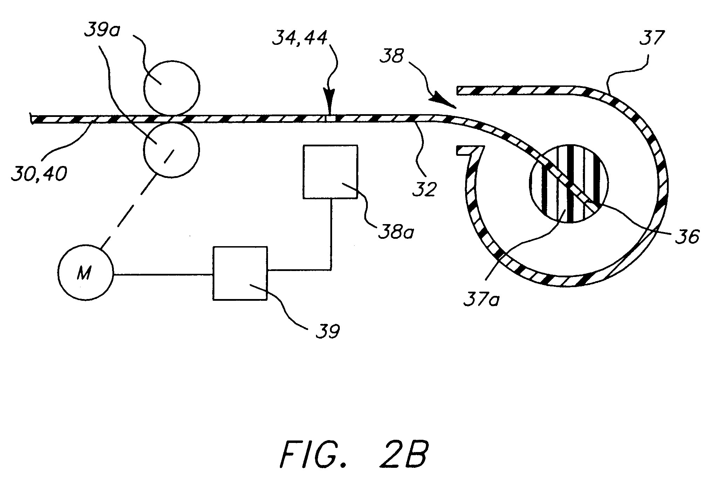

Referring to Figure 2A, there is shown an example of a filmstrip 30 of the invention having a trailing end portion 32 in which an end-locating end of film feature, for example, a perforation hole 34 is located at a precise, end-locating distance from the physical end 36 of the filmstrip to form an end of filmstrip perforation. The perforation is located at a distance from the physical end of the filmstrip which is short of the film exposure area and greater than a length of film remaining inside a corresponding film cartridge shell 37 enclosing a rotatable spool with a core 37a, when the film is fully withdrawn through an entrance/exit slot or opening 38 in the shell and is still attached to the spool core as shown in Figure 2B. Thus the perforation 34 is outside slot 38 of the cartridge 37 and can be detected by a sensor 38a for determining the position of the physical end of the filmstrip 30. The perforation 34 may have any suitable shape or dimension, for example, a circular hole or a generally rectangular shaped slot, which can be located by a sensor. In a preferred embodiment of the invention the perforation is in the form of a circular perforation.

In this embodiment of the filmstrip, the trailing end of the filmstrip is tapered down towards the physical end, the narrow end of the taper is at right angles to the long axis of the filmstrip and a row of perforations at the end of the filmstrip is adjacent to and aligned parallel with the narrow end. The row of perforations can be attached to a film holding device. In a preferred configuration, for attaching the filmstrip to a film holding device, for example, a spool core 37a of a cartridge 37, the perforations at the end of the filmstrip are circular or generally obround shaped and form a row of a generally obround shaped slot between two circular holes.

Sensor 38a can be any suitable device, for example an optical sensor or equivalent device, which senses the presence of the end of filmstrip perforation 34 and signals a logic or control device 39 to activate a piece of equipment for use in attaching or detaching the filmstrip (not illustrated).

With this invention when it is necessary to re-shape or re-form the end of the filmstrip, a new end-locating end of filmstrip perforation would be created and located at the same precise distance from the new physical end of the filmstrip as the old perforation was from the physical end of the original filmstrip. The perforation is preferably located adjacent to an edge of the filmstrip. Such a location at the edge of the filmstrip is more convenient for cooperating with sensing equipment and other features on the filmstrip.

In some photographic systems the filmstrip is reloaded into the customer's cartridge. When this is done it is necessary to position the filmstrip so that the correct length of film is fed into the cartridge for attaching to the spool. The end of film feature 34 enables accurate determination of this length and also helps align the film with the cartridge. Similarly, when such a film is removed from the cartridge or a film holding device, detection of the precise position of the physical end of the filmstrip is needed to signal equipment used to release the filmstrip from the film holder. The end of film feature is also useful for locating the physical end of the filmstrip in photo finishing operations, for example, de-splicing and re-shaping operations.

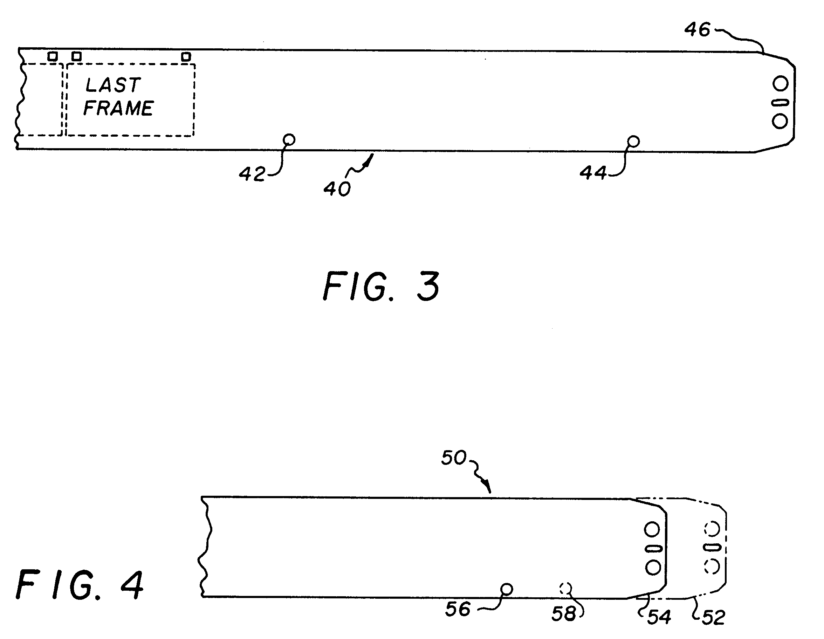

Referring to Figure 3, there is shown an example of a film 40 in which the exposure perforation 42 and the end of filmstrip perforation 44 at the trailing end 46 of the filmstrip are preferably adjacent to the same edge of the film and are aligned in a longitudinal direction. The exposure perforation is more remote from the end of the film than the end of filmstrip perforation. In another embodiment of the invention the exposure perforation or feature serves as an anticipation feature for alerting the sensor and signaling the control device to wait until the next perforation is sensed before activating equipment. The exposure features 24 and 26, Figure 1, can be used separately or in combination as anticipation features.

In a typical detachment operation in which the end of the filmstrip is being removed as shown schematically in Figure 2B from an apparatus, such as a film cartridge or a processing spool the filmstrip would be removed using nip rollers 39a or other known unwinding device or means for filmstrip removal. An optical sensor or equivalent device would sense the presence of the end-locating end of film perforation during the removal. The logic or control device would be programmed to stop removal of the filmstrip and the position of the physical end of the filmstrip would be identified and precisely located. Alternatively the sensor would sense the presence of the exposure perforation during the removal and the logic or control device would be programmed to wait until the next perforation, for example the end of filmstrip perforation, is sensed. The logic device would then stop removal of the filmstrip and the position of the physical end of the filmstrip would be identified and precisely located. The filmstrip would then be detached from the apparatus by a suitable means for detaching the filmstrip end.

For some photographic systems, in order to limit the length of the unused portion of the filmstrip, the end of filmstrip perforation is located, for example, at about 38mm from the physical end of the filmstrip and centered 2mm from the edge of the filmstrip. This allows for up to about three re-formings of a damaged end of the film including a new end of filmstrip perforation, before the physical end of the filmstrip approaches too close to the end of the exposure area, and it becomes inoperable. When an anticipation feature, for example an exposure feature, is present at the end of the exposure area then after three re-forming operations the filmstrip is appreciably shorter and thus the exposure feature and the end of filmstrip perforation might overlap or interfere with each other. Thus, the skilled person will appreciate that both a first distance from the end of filmstrip perforation to the physical end and a second distance from the exposure area to the physical end are selected in accordance with the invention to be sufficient to allow up to three re-forming operations.

Figure 4 illustrates a filmstrip 50 in which a damaged end of the filmstrip 52 is removed and a new end 54 is re-formed. Simultaneously a new end of film perforation 56 is formed. The old end of film perforation 58 remains but no longer serves any function. Since the old perforation is between the new end of filmstrip perforation and the end of the filmstrip it will not interfere with subsequent sensing of the filmstrip end and re-forming operations.

This invention creates a film feature that is not associated with the exposure area and is directly dimensioned to the physical end of the filmstrip. Thus this invention eliminates the reliability issues associated with web tension sensing, film length metering, or use of exposure area features to determine the end of the filmstrip. The end-locating end of filmstrip perforation of the invention, positively confirms the position of the physical end of the filmstrip even when the filmstrip end is held within a film cartridge.

In addition this invention provides for a physical film feature that is reproduced when the film trailer is re-formed on an apparatus for maintaining the integrity of the filmstrip end thereby maintaining a physical feature that is directly related to the end of the filmstrip.

While the invention has been described in connection with a presently preferred embodiment thereof, those skilled in the art will recognize that many modifications and changes may be made therein without departing from the true spirit and scope of the invention, which accordingly is intended to be defined solely by the appended claims.

## Claims

1. A photographic filmstrip (30; 40; 50) for use in a cartridge which includes a cartridge shell (37), a spool rotatably mounted within the shell (37) and having a core (37a), and an opening (38) in the shell (37) through which the filmstrip (30; 40; 50) can be inserted into or removed from the shell (37), the filmstrip (30; 40; 50) comprising:
an exposure area, a physical end (36; 46; 52, 54), and a trailing end portion (32) between the exposure area and the physical end (36; 46; 52, 54), the trailing end portion (32) having features near the physical end (36; 46; 52, 54) for enabling the filmstrip (30; 40; 50) to be selectively attached to or detached from the core (37a);
characterized in that the filmstrip (30; 40; 50) further comprises a locating feature (34; 44; 56, 58) on the trailing end portion (32) which is positioned at a first distance from the physical end (36; 46; 52, 54) for locating a position thereof, the first distance being greater than a length of the filmstrip (30; 40; 50) which will remain inside the shell (37) when the trailing end portion (32) remains attached to the core (37a) and the filmstrip (30; 40; 50) has been withdrawn from the shell (37) to permit detachment of the features from the core (37a);
and in that the first distance is less than a second distance from the physical end (36; 46; 52, 54) such that the first and second distances are sufficient to allow at least one re-forming of the physical end (36; 46; 52, 54) with the features enabling attachment and detachment and the locating feature (34; 44; 56, 58).

2. A filmstrip according to Claim 1, wherein the trailing end portion (32) further includes an anticipation feature (24, 26) located more remotely from the physical end (36; 46; 52, 54) than the locating feature (34; 44; 56, 58).

3. A filmstrip according to Claim 2, wherein the anticipation feature (24, 26) is an exposure feature for determining a last frame of the filmstrip (30; 40; 50).

4. A filmstrip according to Claim 2 or 3, wherein the anticipation feature (24, 26) is adjacent an edge of the filmstrip (30; 40; 50).

5. A filmstrip according to any one of Claims 1 to 4, wherein the locating feature (34; 44; 56, 58) is adjacent an edge of the filmstrip (30; 40; 50).

6. A filmstrip according to Claim 5, wherein the locating feature (34; 44; 56, 58) and the anticipation feature (26) are adjacent a same edge of the filmstrip (30; 40; 50).

7. A filmstrip according to Claim 2, wherein each re-formed locating feature (56) is located between the anticipation feature (26) and a next previous locating feature (58).

8. A filmstrip according to any one of Claims 1 to 7, wherein the first and second distances are sufficient for up to three re-formings of the physical end (36; 46; 52, 54) with the features enabling attachment and detachment, and the locating feature (34; 44; 56, 58).
